# EUROPEAN PATENT APPLICATION

(11) **EP 4 480 614 A1**
(43) Date of publication of application: **25.12.2024**
(21) Application number: 22935509.4
(22) Date of filing: 31.03.2022
(51) Int. Cl.: B23H 7/02

(54) **WIRE ELECTRIC DISCHARGE MACHINING DEVICE**

(71) Applicant: FANUC CORPORATION, Oshino-mura Minamitsuru-gun Yamanashi 401-0597 (JP)
(72) Inventor: NAKASHIMA, Yasuo, Minamitsuru-gun, Yamanashi 401-0597 (JP)
(74) Representative: Keil & Schaafhausen Patentanwälte PartGmbB
(86) International application number: PCT/JP2022/016807
(87) International publication number: WO 2023/188370

(57) **Abstract**

A wire electric discharge machining device (10) comprises: a voltage application unit (50) that applies an induced voltage to an electrode gap; an application control unit (76) that controls the voltage application unit (50) so that the application of induced voltage and the stopping of the application of induced voltage are repeated; and a time change unit (78) that changes time for application of induced voltage. If electric discharge occurs after application of induced voltage has started, or if an application interruption time (T3) has elapsed without occurrence of electric discharge since the start of application of induced voltage, the application control unit (76) stops the application of induced voltage, and the time change unit (78) changes the application interruption time (T3).

## Description

### TECHNICAL FIELD

The present invention relates to a wire electrical discharge machine (wire electric discharge machining device).

### BACKGROUND ART

The wire electrical discharge machine applies an induction voltage for inducing electric discharge at an inter-electrode gap between a wire electrode and a workpiece. In this case, the wire electrical discharge machine performs servo feed control to move the wire electrode in the machining direction.

The gap amount between the wire electrode and the workpiece varies depending on the electrostatic attraction force and the discharge repulsion force. The electrostatic attraction force is a force that attracts the wire electrode to the workpiece, and is generated during application of the induction voltage. The discharge repulsion force is a force that repels the wire electrode from the workpiece, and is generated during the occurrence of the electric discharge. When the electrostatic attraction force and the discharge repulsion force are balanced, the change in the gap amount between the wire electrode and the workpiece is reduced.

However, during machining, there are cases, for example, where the facing area between the wire electrode and the workpiece changes suddenly at a corner of the machining path of a machining program, or where the flow of dielectric working fluid changes depending on the machining environment (for example, the machining position in the workpiece) and the discharge of sludge becomes poor. In this case, the frequency of electric discharges changes, the balance between the electrostatic attraction force and the discharge repulsion force is lost, and consequently the straightness accuracy deteriorates.

The straightness accuracy refers to a difference between the maximum dimension and the minimum dimension in the thickness direction of a machined workpiece. If the difference is large, the side surface of the machined workpiece is in a state of being convex or concave as compared with the vertical side surface. Therefore, the straightness accuracy is improved as the difference between the maximum dimension and the minimum dimension in the thickness direction of the machined workpiece is smaller.

JP 5739563 B2 discloses a wire electrical discharge machine that stops application of an induction voltage to an inter-electrode gap in a case where a discharge delay time, which is a duration from the application of the voltage to the gap until occurrence of the electric discharge, is smaller than a predetermined reference value.

### SUMMARY OF THE INVENTION

In JP 5739563 B2, when the discharge delay time is smaller than the predetermined reference value, the average voltage of the induction voltage applied per unit time decreases, and the electrostatic attraction force decreases. In this case, when the application of the induction voltage to the inter-electrode gap is stopped, the chance of the occurrence of the electric discharge changes, and the discharge repulsion force decreases.

However, when the induction voltage is repeatedly applied at intervals per unit time, the frequency of non-occurrence of electric discharge tends to be higher than the frequency of occurrence of electric discharge. In the above JP 5739563 B2, the chance of the occurrence of electric discharge is lost, and as a result, the balance between the electrostatic attraction force and the discharge repulsion force can be difficult to maintain. Therefore, the problem is that it is difficult to obtain good straightness accuracy.

The present invention has the object of solving the aforementioned problem.

According to an aspect of the present invention, there is provided a wire electrical discharge machine for machining a workpiece by generating electric discharge at an inter-electrode gap between the workpiece and a wire electrode, the wire electrical discharge machine including: a voltage application unit configured to apply an induction voltage for inducing the electric discharge, to the inter-electrode gap; an application control unit configured to control the voltage application unit to repeat application of the induction voltage and stop of the application of the induction voltage; and a time changing unit configured to change a time for applying the induction voltage, wherein the application control unit stops the application of the induction voltage in a case that the electric discharge occurs after the application of the induction voltage has been started or in a case that an application interruption time elapses without the electric discharge occurring after the application of the induction voltage has been started, and the time changing unit changes the application interruption time.

According to the aspect of the present invention, it is possible to adjust the average voltage of the induction voltage applied per unit time without changing the opportunity of occurrence of electric discharge. Therefore, the balance between the electrostatic attraction force and the discharge repulsion force can be easily maintained, and as a result, good straightness accuracy can be obtained.

### BRIEF DESCRIPTION OF DRAWINGS

[FIG. 1] FIG. 1 is a schematic diagram showing a configuration of a wire electrical discharge machine according to an embodiment;
[FIG. 2] FIG. 2 is a block diagram showing a configuration of a machining control system of the wire electrical discharge machine according to a first embodiment;
[FIG. 3] FIG. 3 is a diagram showing a change in an induction voltage applied to an inter-electrode gap by a voltage application unit under control of an application control unit;
[FIG. 4] FIG. 4A is a diagram showing an example of a change in the induction voltage when an application interruption time of FIG. 3 is shortened, and FIG. 4B is a diagram showing an example of a change in the induction voltage when the application interruption time of FIG. 3 is lengthened;
[FIG. 5] FIG. 5 is a graph showing the relationship between the curvature and the application interruption time;
[FIG. 6] FIG. 6 is a block diagram showing a configuration of a machining control system of a wire electrical discharge machine according to a fourth embodiment; and
[FIG. 7] FIG. 7 is a block diagram showing a configuration of a machining control system of a wire electrical discharge machine according to a fifth embodiment.

### DETAILED DESCRIPTION OF THE INVENTION

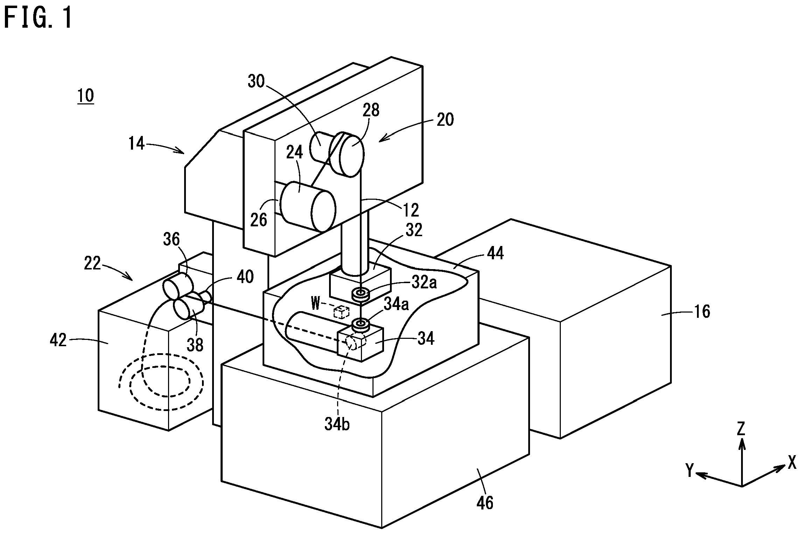

FIG. 1 is a schematic diagram showing a configuration of a wire electrical discharge machine 10. In FIG. 1, an X-axis direction, a Y-axis direction, and a Z-axis direction, which are driving directions for axes of the wire electrical discharge machine 10, are shown. Note that the X-axis direction and the Y-axis direction are orthogonal to each other on a plane, and the Z-axis direction is orthogonal to each of the X-axis direction and the Y-axis direction.

The wire electrical discharge machine 10 is a machine tool that machines a workpiece W by generating electric discharge at an inter-electrode gap between the workpiece W and a wire electrode 12. The wire electrical discharge machine 10 includes a machine main body 14 and a dielectric fluid unit 16.

The wire electrode 12 is formed of, for example, metal material such as tungsten-based, copper alloy-based, or brass-based material. The workpiece W is formed of, for example, metal material such as iron-based material or superhard material (tungsten carbide). The workpiece W is also referred to as a work or a workpiece to be machined.

The machine main body 14 includes a supplying system 20 and a collecting system 22. The supplying system 20 supplies the wire electrode 12 toward the workpiece W. The collecting system 22 collects the wire electrode 12 that has passed through the workpiece W.

The supplying system 20 includes a wire bobbin 24, a torque motor 26, a brake shoe 28, a brake motor 30, and an upper die guide 32. The wire bobbin 24 has an unused wire electrode 12 wound thereon. The torque motor 26 applies torque to the wire bobbin 24. The brake shoe 28 applies a braking force to the wire electrode 12 by friction. The brake motor 30 applies a brake torque to the brake shoe 28. The upper die guide 32 guides the wire electrode 12 above the workpiece W. The upper die guide 32 has a support block 32a for supporting the wire electrode 12.

The collecting system 22 includes a lower die guide 34, a pinch roller 36, a feed roller 38, a feed motor 40, and a collection box 42. The lower die guide 34 guides the wire electrode 12 below the workpiece W. The lower die guide 34 includes a support block 34a for supporting the wire electrode 12 and a guide roller 34b for changing the direction of the wire electrode 12. The pinch roller 36 and the feed roller 38 sandwich the wire electrode 12. The feed motor 40 applies torque to the feed roller 38. The collection box 42 collects the wire electrode 12 transferred via the pinch roller 36 and the feed roller 38.

The machine main body 14 includes a work pan 44 capable of storing a dielectric working fluid (working fluid). The working fluid is a liquid such as deionized water, etc., used during machining. The work pan 44 is placed on a base 46. The upper die guide 32 and the lower die guide 34 are disposed in the work pan 44, and the workpiece W is placed between the upper die guide 32 and the lower die guide 34. The upper die guide 32, the lower die guide 34, and the workpiece W are immersed in the working fluid stored in the work pan 44.

At least one of the upper die guide 32 and the lower die guide 34 ejects a clean working fluid free from sludge (cutting chips), toward the inter-electrode gap between the wire electrode 12 and the workpiece W. In this case, the inter-electrode gap is filled with the clean liquid suitable for machining, and a decrease in machining accuracy due to sludge generated in accordance with machining is prevented.

The dielectric fluid unit 16 is a device for adjusting the quality of the dielectric working fluid. The dielectric fluid unit 16 removes sludge generated in the work pan 44. The dielectric fluid unit 16 adjusts the electric resistivity, temperature, and the like. The working fluid whose liquid quality has been adjusted by the dielectric fluid unit 16 is returned to the work pan 44 again, and is ejected from at least one of the upper die guide 32 or the lower die guide 34 toward the inter-electrode gap.

Hereinafter, a machining control system of the wire electrical discharge machine 10 will be described with reference to some embodiments.

### [First Embodiment]

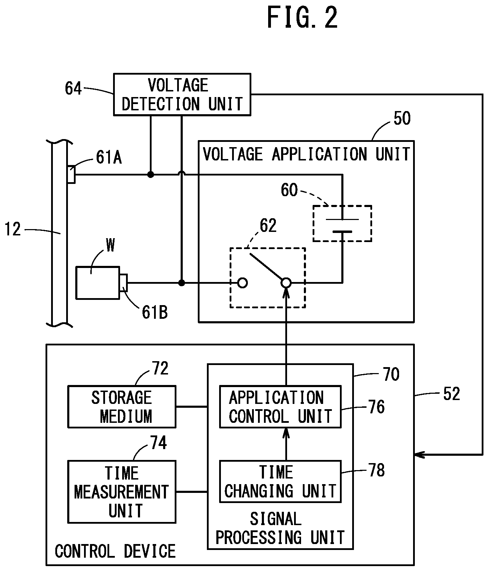

FIG. 2 is a block diagram showing a configuration of a machining control system of the wire electrical discharge machine 10 according to a first embodiment. The wire electrical discharge machine 10 further includes a voltage application unit 50, a control device 52, and a voltage detection unit 64.

The voltage application unit 50 applies an induction voltage for inducing electric discharge at the inter-electrode gap between the wire electrode 12 and the workpiece W. The voltage application unit 50 includes a power supply 60 and a switching element 62. The voltage detection unit 64 measures the induction voltage applied to the inter-electrode gap.

The power supply 60 is a voltage source for applying an induction voltage to the inter-electrode gap between the wire electrode 61A in contact with the wire electrode 12 and the workpiece electrode 61B in contact with the workpiece W. The switching element 62 switches between application of the induction voltage to the inter-electrode gap and stop of the application of the induction voltage. The switching element 62 is controlled by the control device 52.

The control device 52 includes a signal processing unit 70, a storage medium 72, and a time measurement unit 74. The signal processing unit 70 includes a processor such as a CPU or a GPU. The storage medium 72 includes a volatile memory such as a RAM and a nonvolatile memory such as a ROM, a flash memory, and a hard disk. At least a part of the storage medium 72 may be included in the signal processing unit 70.

The signal processing unit 70 controls the motors for driving the upper die guide 32 and the lower die guide 34 based on a machining program stored in the storage medium 72. In this case, the signal processing unit 70 moves the wire electrode 12 relative to the workpiece W in at least one of the X direction or the Y direction along a machining path defined by the machining program. The signal processing unit 70 may control a motor for moving a table on which the workpiece W is fixed, instead of controlling the motors for driving the upper die guide 32 and the lower die guide 34.

The signal processing unit 70 controls the torque motor 26 and the feed motor 40. In this case, the signal processing unit 70 applies torque to the wire bobbin 24 and the feed roller 38, and causes the wire electrode 12 in contact with the wire bobbin 24 and the feed roller 38 to travel in the traveling direction. The traveling direction (-Z direction) of the wire electrode 12 and the direction of movement (X direction, Y direction) of the wire electrode 12 that is relatively moved with respect to the workpiece W intersect each other.

The signal processing unit 70 includes an application control unit 76 and a time changing unit 78. The application control unit 76 and the time changing unit 78 may be realized by the signal processing unit 70 processing a program stored in the storage medium 72. At least one of the application control unit 76 or the time changing unit 78 may be realized by an integrated circuit such as an ASIC or an FPGA. At least one of the application control unit 76 or the time changing unit 78 may be configured by an electronic circuit including a discrete device.

The application control unit 76 controls the switching element 62 of the voltage application unit 50 based on the induction voltage measured by the voltage detection unit 64 and the time measured by the time measurement unit 74, and thereby repeats the application of the induction voltage to the inter-electrode gap and the stop of the application of the induction voltage. When the switching element 62 is switched from OFF to ON, an induction voltage is applied to the inter-electrode gap. On the other hand, when the switching element 62 is switched from ON to OFF, the application of the induction voltage to the inter-electrode gap is stopped.

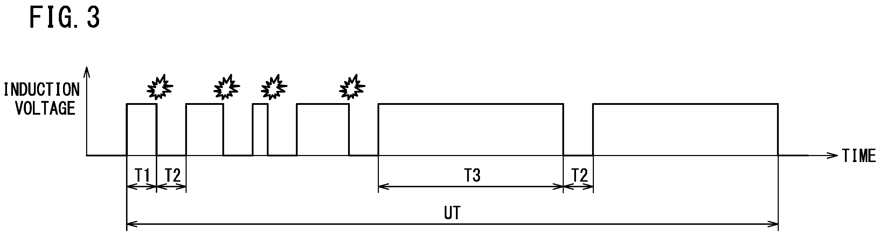

FIG. 3 is a diagram showing a change in an induction voltage applied to the inter-electrode gap by the voltage application unit 50 under control of the application control unit 76. When the switching element 62 is turned on, the application control unit 76 monitors the induction voltage measured by the voltage detection unit 64. When electric discharge occurs, the induction voltage drops rapidly. Note that a discharge delay time T1, which is a time period from the start of the application of the induction voltage to the occurrence of electric discharge, is indefinite.

When the induction voltage becomes lower than a predetermined voltage value, the application control unit 76 turns off the switching element 62. When a pause time T2 has elapsed since the switching element 62 was turned off, the application control unit 76 turns on the switching element 62 again to apply the induction voltage to the inter-electrode gap. The pause time T2 is a time period from when the application of the induction voltage is stopped to when the application of the induction voltage is started again. The pause time T2 is stored in the storage medium 72.

On the other hand, there is a case where no electric discharge occurs even when the switching element 62 is turned on and the induction voltage is applied to the inter-electrode gap. In this case, the application control unit 76 turns off the switching element 62 when an application interruption time T3 has elapsed since the switching element 62 was turned on. When the pause time T2 has elapsed since the switching element 62 was turned off, the application control unit 76 turns on the switching element 62 again to apply the induction voltage to the inter-electrode gap.

The application interruption time T3 is a time period from when the application of the induction voltage is started to when the application of the induction voltage is forcibly stopped, in the case that no electric discharge occurs. The application interruption time T3 is stored in the storage medium 72. The application interruption time T3 stored in the storage medium 72 is changed as appropriate by the time changing unit 78. That is, the application interruption time T3 is a variable. In the present embodiment, the pause time T2 stored in the storage medium 72 is not changed by the time changing unit 78. That is, the pause time T2 is a constant.

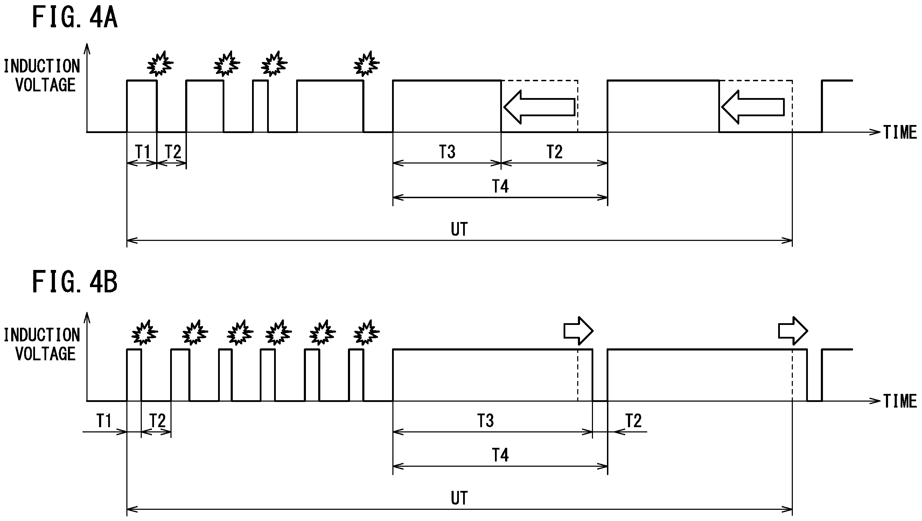

FIG. 4A and FIG. 4B are diagrams showing examples of change in the induction voltage in a case that the application interruption time T3 of FIG. 3 is changed. In FIG. 4A, an example of a case where the application interruption time T3 is shortened is shown. In addition, in FIG. 4B, an example of a case where the application interruption time T3 is lengthened is shown. The time changing unit 78 changes the application interruption time T3 based on information indicating the frequency of electric discharge occurring per unit time (predetermined measurement time) UT.

In the present embodiment, the information indicating the frequency of electric discharge occurring pert unit time UT is the number of electric discharges occurring per unit time UT. In this case, the time changing unit 78 calculates the number of electric discharges occurring in the unit time UT based on the induction voltage measured by the voltage detection unit 64 and the time measured by the time measurement unit 74, and lengthens the application interruption time T3 as the number of electric discharges is larger.

The number of electric discharges has a correlation with the frequency of electric discharges, and therefore indicates the frequency of electric discharges that occur per unit time UT. The larger the number of discharges, the higher the frequency of electric discharges. When the frequency of electric discharges is high, the average voltage of the induction voltage in the unit time UT decreases. Therefore, as the number of electric discharges is larger, the discharge repulsion force tends to be stronger and the electrostatic attraction force tends to be weaker. On the other hand, since no electric discharge occurs during the application interruption time T3, even if the application continues during the pause time T2 after the application interruption time T3, the occurrence of electric discharge hardly increases. Therefore, even if the application interruption time T3 is lengthened, the discharge repulsion force remains substantially unchanged. On the contrary, when the application interruption time T3 becomes longer, the average voltage of the induction voltage per unit time UT increases, and thus the electrostatic attraction force tends to strengthen.

In this way, the application interruption time T3 is set to be longer as the number of electric discharges increases, and thus the average voltage can be increased without changing the chance of occurrence of electric discharge. Therefore, the balance between the electrostatic attraction force and the discharge repulsion force can be easily maintained, and as a result, good straightness accuracy can be obtained.

The time changing unit 78 may change the application interruption time T3 while keeping the total time T4 of the application interruption time T3 and the pause time T2 immediately after the application interruption time T3 constant. When the total time T4 is kept constant, it is possible to prevent the occurrence of a difference in the chance of occurrence of electric discharge per unit time UT between the case where the application interruption time T3 is changed and the case where the application interruption time T3 is not changed.

The time changing unit 78 may change the application interruption time T3 during machining from the start of machining to the end of machining, or may change the application interruption time T3 only during machining of a part of the machining path. Examples of the part of the machining path include a corner portion and a path segment designated by the operator. In this case, the time changing unit 78 monitors the processing state of the machining program by the signal processing unit 70, and starts changing the application interruption time T3 at the start timing for machining the corner portion or machining the path segment designated by the operator. On the other hand, the time changing unit 78 ends the change of the application interruption time T3 at the machining end timing of the corner portion or the path segment designated by the operator.

### [Second Embodiment]

A second embodiment is the same as the first embodiment except for the information indicating the frequency of electric discharges occurring per unit time UT. Therefore, the description of the second embodiment will be limited to the matters related to the information indicating the frequency of electric discharges occurring per unit time UT. In the case of the second embodiment, the information indicating the frequency of electric discharges occurring per unit time UT is the integrated time (totaled time) of the discharge delay times T1 in the unit time UT. The time changing unit 78 lengthens the application interruption time T3 as the integrated time is shorter.

The integrated time of the discharge delay times T1 is correlated with the frequency of electric discharges, and the integrated time thereof therefore indicates the frequency of electric discharges occurring per unit time UT. The shorter the integrated time of the discharge delay times T1, the higher the frequency of electric discharges. When the frequency of electric discharges is high, the average voltage of the induction voltage in the unit time UT decreases. Therefore, as the integrated time is shorter, the discharge repulsion force tends to be stronger and the electrostatic attraction force tends to be weaker. On the other hand, since no electric discharge occurs during the application interruption time T3, even if the application continues during the pause time T2 after the application interruption time T3, the occurrence of electric discharge hardly increases. Therefore, even if the application interruption time T3 is lengthened, the discharge repulsion force remains substantially unchanged. On the contrary, when the application interruption time T3 becomes longer, the average voltage of the induction voltage in the unit time UT increases, and thus the electrostatic attraction force tends to strengthen.

As described above, in the second embodiment, as the integrated time of the discharge delay times T1 in the unit time UT is shorter, the application interruption time T3 is set to be longer. Thus, the average voltage can be increased without changing the chance of occurrence of electric discharge. Therefore, as in the first embodiment, the balance between the electrostatic attraction force and the discharge repulsion force can be easily maintained, and as a result, good straightness accuracy can be obtained.

### [Third Embodiment]

In the third embodiment, the information indicating the frequency of electric discharges occurring in the unit time UT is replaced with the machining shape specified by the machining program. Therefore, the description of the third embodiment will be limited to the matters related to the machining shape.

In the machining program, a straight portion, an outer corner portion, or an inner corner portion is specified as a machining shape. When the outer corner portion is specified as the machining shape, a curvature (or a radius of curvature) is specified in the machining program. The outer corner portion is a machining path segment that resultantly forms a portion, of the machined workpiece, that protrudes outward. When the machining shape is the outer corner portion, the time changing unit 78 shortens the application interruption time T3 as the curvature is larger (or as the radius of curvature is smaller).

The curvature of the outer corner portion specified as the machining shape by the machining program has a correlation with the frequency of electric discharges, and therefore indicates the frequency of electric discharges occurring in the unit time UT. The larger the curvature of the outer corner portion (or the smaller the radius of curvature thereof), the lower the frequency of electric discharges. When the frequency of electric discharges is low, the average voltage of the induction voltage in the unit time UT increases. Therefore, as the curvature of the outer corner portion is larger (or the radius of curvature is smaller), the discharge repulsion force tends to be weaker and the electrostatic attraction force tends to be stronger. On the other hand, since no electric discharge occurs during the application interruption time T3, the chance of occurrence of electric discharge is hardly changed even if the application interruption time T3 is shortened. Therefore, even if the application interruption time T3 is shortened, the discharge repulsion force is not substantially changed. On the contrary, when the application interruption time T3 becomes shorter, the average voltage of the induction voltage in the unit time UT decreases, and thus the electrostatic attraction force tends to weaken.

In this way, when the machining shape is the outer corner portion, the application interruption time T3 is shortened as the curvature is larger (or the radius of curvature is smaller), and thus the average voltage can be lowered without changing the chance of occurrence of electric discharges. Therefore, as in the first embodiment, the balance between the electrostatic attraction force and the discharge repulsion force can be easily maintained, and as a result, good straightness accuracy can be obtained.

On the other hand, when the inner corner portion is specified as the machining shape, a curvature (or a radius of curvature) for the inner corner shape is specified in the machining program. The inner corner portion is a machining path segment that resultantly forms a portion, of the machined workpiece, that is recessed inward. When the machining shape is the inner corner portion, the time changing unit 78 lengthens the application interruption time T3 as the curvature is larger (or as the radius of curvature is smaller).

The curvature of the inner corner portion specified as the machining shape by the machining program has a correlation with the frequency of electric discharges, and therefore indicates the frequency of electric discharges occurring in the unit time UT. The larger the curvature of the inner corner portion (or the smaller the radius of curvature thereof), the higher the frequency of electric discharges. When the frequency of electric discharges is high, the average voltage of the induction voltage in the unit time UT decreases. Therefore, as the curvature of the inner corner portion is larger (or as the radius of curvature is smaller), the discharge repulsion force tends to be stronger and the electrostatic attraction force tends to be weaker. On the other hand, since no electric discharge occurs during the application interruption time T3, even if the application continues during the pause time T2 after the application interruption time T3, the occurrence of electric discharge hardly increases. Therefore, even if the application interruption time T3 is lengthened, the discharge repulsion force remains substantially unchanged. On the contrary, when the application interruption time T3 becomes longer, the average voltage of the induction voltage in the unit time UT increases, and thus the electrostatic attraction force tends to strengthen.

In this way, when the machining shape is the inner corner portion, the application interruption time T3 is lengthened as the curvature is larger (or the radius of curvature is smaller), and thus the average voltage can be increased without changing the chance of occurrence of electric discharges. Therefore, as in the first embodiment, the balance between the electrostatic attraction force and the discharge repulsion force can be easily maintained, and as a result, good straightness accuracy can be obtained.

On the other hand, when the straight portion is specified as the machining shape, the curvature (or the radius of curvature) is not specified in the machining program. In this case, the time changing unit 78 sets the application interruption time T3 to a reference value. The reference value is a predetermined constant and is stored in the storage medium 72.

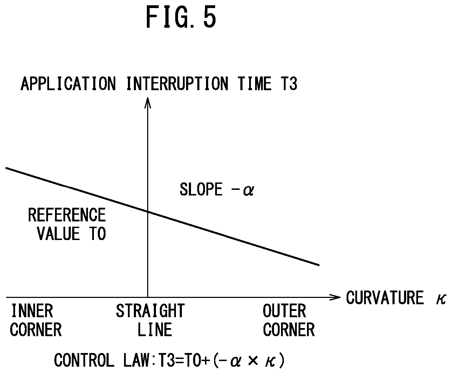

FIG. 5 is a graph showing the relationship between the curvature and the applied interruption time T3. The time changing unit 78 may change the application interruption time T3 in accordance with a control law of "T3 = T0 + (-α×κ)".

### [Fourth Embodiment]

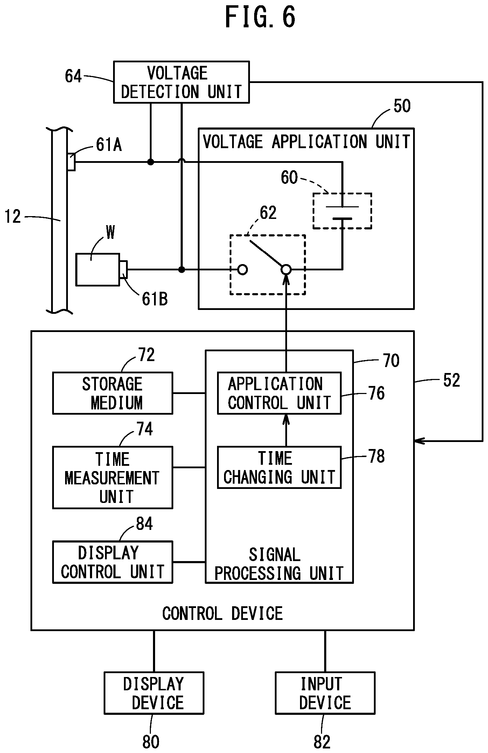

FIG. 6 is a block diagram showing a configuration of a machining control system of the wire electrical discharge machine 10 according to a fourth embodiment. In FIG. 6, the same components as those described in the first embodiment are denoted by the same reference numerals. In the fourth embodiment, descriptions that overlap or are duplicative of those stated in the first embodiment are omitted. In the fourth embodiment, a display device 80, an input device 82, and a display control unit 84 are newly provided.

The display device 80 has a display screen and displays information supplied from the control device 52 on the display screen. The display device 80 may be a liquid crystal display or the like. The input device 82 supplies information input in response to an operation of an operator to the control device 52. Examples of the input device 82 include a mouse, a keyboard, a touch panel disposed on the display screen of the display device 80, and an operation panel provided on a housing of the machine main body 14 of the wire electrical discharge machine 10.

The display control unit 84 is included in the signal processing unit 70 of the control device 52. The display control unit 84 may be realized by the signal processing unit 70 processing a program stored in the storage medium 72. The display control unit 84 may be realized by an integrated circuit such as an ASIC or an FPGA. The display control unit 84 may be configured by an electronic circuit including a discrete device.

When a request for changing the degree of effect of machining is supplied from the input device 82, the display control unit 84 controls the display device 80 to display a plurality of options indicating the degree of effect on straightness accuracy. For example, the display control unit 84 displays a first option "slightly concave the center portion of the plate thickness more than usual" and a second option "slightly convex the center portion of the plate thickness more than usual". The plate thickness is the thickness of the machined workpiece.

In the present embodiment, the application interruption times T3 are stored in the storage medium 72 in association respectively with the plurality of options indicating the degree of effect on straightness accuracy. The application interruption times T3 associated with the respective options are different from each other. For example, the application interruption time T3 associated with the first option is longer than the application interruption time T3 associated with the second option.

When one of the plurality of options displayed on the display screen of the display device 80 is selected by the operator using the input device 82, a request for changing the degree of effect on straightness accuracy corresponding to the selected option is supplied from the input device 82 to the control device 52. In this case, the time changing unit 78 changes the currently set application interruption time T3 to the application interruption time T3 corresponding to the degree of effect on the straightness accuracy selected by the operator.

In this way, the setting of the application interruption time T3 is changed to a setting corresponding to the degree of effect of machining selected by the operator. Thus, even if the machining condition changes depending on the material of the workpiece W or the like, the application interruption time T3 corresponding to such change can be set through the operation of the operator.

This embodiment can be applied to the second embodiment. In this case, the time changing unit 78 compensates the integrated time by multiplying the integrated time of the discharge delay times T1 in the unit time UT by a compensation coefficient corresponding to the option selected by the operator.

The present embodiment can be applied to the third embodiment. In this case, the time changing unit 78 compensates the curvature (or the radius of curvature) by multiplying the curvature (or the radius of curvature) of the outer corner portion or the inner corner portion by a compensation coefficient corresponding to the option selected by the operator.

### [Fifth Embodiment]

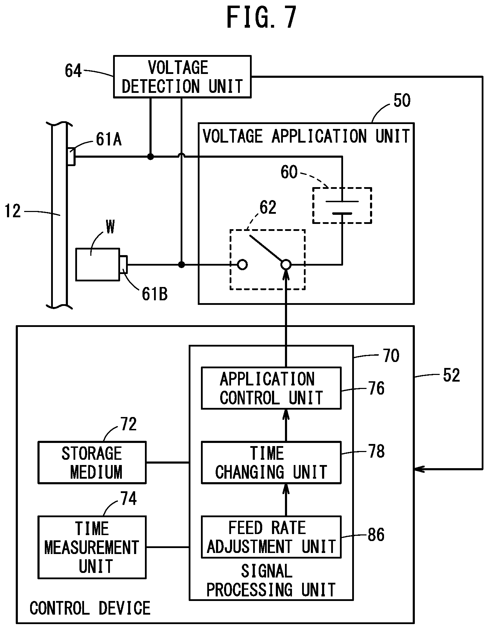

FIG. 7 is a block diagram showing a configuration of a machining control system of the wire electrical discharge machine 10 according to a fifth embodiment. In FIG. 7, the same components as those described in the first embodiment are denoted by the same reference numerals. In the fifth embodiment, descriptions that overlap or are duplicative of those stated in the first embodiment are omitted. In the fifth embodiment, a feed rate adjustment unit 86 is newly provided.

The feed rate adjustment unit 86 is included in the signal processing unit 70 of the control device 52. The feed rate adjustment unit 86 may be realized by the signal processing unit 70 processing a program stored in the storage medium 72. The feed rate adjustment unit 86 may be realized by an integrated circuit such as an ASIC or an FPGA. The feed rate adjustment unit 86 may be configured by an electronic circuit including a discrete device.

The feed rate adjustment unit 86 adjusts the feed rate of the wire electrode 12 by controlling the motor for relatively moving the wire electrode 12 in at least one of the X direction or the Y direction. In this case, the feed rate adjustment unit 86 calculates the average voltage of the induction voltage in the unit time UT, based on the induction voltage measured by the voltage detection unit 64 and the time measured by the time measurement unit 74. Further, the feed rate adjustment unit 86 compares the calculated average voltage with a target value, and adjusts the feed rate of the wire electrode 12 such that the deviation between the average voltage and the target value becomes smaller.

The target value is set as a dummy average voltage obtained in the case where the application interruption time T3 is not changed. The dummy average voltage is set by the time changing unit 78. In this case, the time changing unit 78 calculates the dummy average voltage based on the average voltage actually calculated based on the induction voltage measured by the voltage detection unit 64 and the time measured by the time measurement unit 74, and the reference value of the application interruption time T3. For example, the time changing unit 78 calculates a difference time between the changed application interruption time T3 and the reference value of the application interruption time T3. Next, the time changing unit 78 acquires a combined time by adding the integrated time of the discharge delay times T1 in the unit time UT to the calculated difference time. Next, the time changing unit 78 calculates the average of the induction voltage applied during the acquired combined time, as the dummy average voltage.

In this way, the feed rate of the wire electrode 12 is adjusted based on the dummy average voltage obtained when the application interruption time T3 is not changed. Thus, the application interruption time T3 can be changed without changing the existing processing details in the feed rate adjustment unit 86.

The present embodiment can be applied not only to the first embodiment but also to any of the second embodiment, the third embodiment, and the fourth embodiment.

### [Sixth Embodiment]

A sixth embodiment is the same as the first embodiment except for the time changing unit 78. Therefore, the sixth embodiment will be described only in terms of the time changing unit 78. In the case of the sixth embodiment, the time changing unit 78 changes the application interruption time T3 and the pause time T2 based on the information indicating the frequency of electric discharges occurring in the unit time UT.

For example, the time changing unit 78 lengthens the application interruption time T3 and the pause time T2 as the number of electric discharges is larger. In this case, the degree of change in the application interruption time T3 according to the number of electric discharges may be the same as or different from the degree of change in the pause time T2 according to the number of electric discharges.

The pause time T2 may be the pause time T2 immediately after the discharge delay time T1 or may be the pause time T2 immediately after the application interruption time T3. However, when the time changing unit 78 changes the application interruption time T3 while keeping the total time T4 constant, the pause time T2 is the pause time T2 immediately after the discharge delay time T1.

In this way, by changing the pause time T2 together with the application interruption time T3, the adjustment amount of the average voltage of the induction voltage applied in the unit time UT can be increased as compared with the case where only the application interruption time T3 is changed.

The present embodiment can be applied not only to the first embodiment but also to any of the second embodiment, the third embodiment, the fourth embodiment, and the fifth embodiment.

### [Invention Obtained from the Embodiment and Modifications]

The invention that can be understood from the above embodiments will be described below.

(1) The present invention provides the wire electrical discharge machine (10) for machining the workpiece (W) by generating electric discharge at the inter-electrode gap between the workpiece and the wire electrode (12), the wire electrical discharge machine including: the voltage application unit (50) configured to apply the induction voltage for inducing the electric discharge, to the inter-electrode gap; the application control unit (76) configured to control the voltage application unit to repeat application of the induction voltage and stop of the application of the induction voltage; and the time changing unit (78) configured to change the time for applying the induction voltage, wherein the application control unit stops the application of the induction voltage in the case that the electric discharge occurs after the application of the induction voltage has been started or in the case that the application interruption time (T3) elapses without the electric discharge occurring after the application of the induction voltage has been started, and the time changing unit changes the application interruption time.

With this configuration, the average voltage of the induction voltage applied per unit time can be adjusted without changing the opportunity of occurrence of electric discharge. Therefore, the balance between the electrostatic attraction force and the discharge repulsion force can be easily maintained, and as a result, good straightness accuracy can be obtained.

(2) In the wire electrical discharge machine according to the present invention, the time changing unit may change the application interruption time based on information indicating the frequency of the electric discharges occurring in the unit time (UT). With this configuration, the average voltage can be adjusted based on the frequency of electric discharges.

(3) In the wire electrical discharge machine according to the present invention, the information may indicate the number of electric discharges occurring in the unit time, and the application control unit may lengthen the application interruption time as the number of electric discharges is larger. With this configuration, an appropriate application interruption time can be set according to the number of electric discharges.

(4) In the wire electrical discharge machine according to the present invention, the information may indicate the integrated time of the discharge delay times (T1) in the unit time, the discharge delay time being the time period from when the application of the induction voltage is started to when the electric discharge occurs, and the application control unit may lengthen the application interruption time as the integrated time is shorter. With this configuration, an appropriate application interruption time can be set in accordance with the discharge delay time.

(5) In the wire electrical discharge machine according to the present invention, the time changing unit may change the application interruption time based on the machining shape specified by the machining program. With this configuration, the average voltage can be adjusted based on the machining shape.

(6) In the wire electrical discharge machine according to the present invention, in the case that the machining shape is the outer corner portion, the time changing unit may shorten the application interruption time as the radius of curvature of the outer corner portion is smaller, and in the case that the machining shape is the inner corner portion, the time changing unit may lengthen the application interruption time as the radius of curvature of the inner corner portion is smaller. With this configuration, an appropriate application interruption time can be set according to the corner portion.

(7) In the wire electrical discharge machine according to the present invention, the time changing unit may change the application interruption time based on the degree of effect on straightness accuracy selected by the operator. With this configuration, even if the machining condition changes depending on the material of the workpiece W or the like, the application interruption time corresponding to such change can be set through the operation of the operator.

(8) The present invention is the wire electrical discharge machine, further including the feed rate adjustment unit (86) configured to adjust the feed rate of the relative position between the workpiece and the wire electrode, wherein the time changing unit may calculate the dummy average voltage obtained in the case where the application interruption time is not changed, based on the average voltage of the induction voltage applied per unit time and the reference value of the application interruption time, and the feed rate adjustment unit may control the feed rate in accordance with the dummy average voltage. With this configuration, the application interruption time can be changed without changing the existing processing details in the feed rate adjustment unit.

(9) In the wire electrical discharge machine according to the present invention, the time changing unit may keep the total time (T4) of the application interruption time and the pause time (T2) constant, the pause time being a time period from when the application interruption time elapses to when the application of the induction voltage is started again. With this configuration, it is possible to prevent the occurrence of a difference in the chance of occurrence of electric discharge per unit time between the case where the application interruption time is changed and the case where the application interruption time is not changed.

(10) In the wire electrical discharge machine according to the present invention, the application control unit may apply the induction voltage again when the pause time has elapsed since the stop of the application of the induction voltage, and the time changing unit may change the pause time together with the application interruption time. With this configuration, the adjustment amount of the average voltage of the induction voltage applied per unit time UT can be increased as compared with the case where only the application interruption time is changed.

### REFERENCE SIGNS LIST

- 10:: wire electrical discharge machine
- 12:: wire electrode
- 50:: voltage application unit
- 52:: control device
- 60:: power supply
- 62:: switching element
- 64:: voltage detection unit
- 70:: signal processing unit
- 72:: storage medium
- 74:: time measurement unit
- 76:: application control unit
- 78:: time changing unit
- 86:: feed rate adjustment unit

## Claims

1. A wire electrical discharge machine (10) for machining a workpiece (W) by generating electric discharge at an inter-electrode gap between the workpiece and a wire electrode (12), the wire electrical discharge machine comprising:
a voltage application unit (50) configured to apply an induction voltage for inducing the electric discharge, to the inter-electrode gap;
an application control unit (76) configured to control the voltage application unit to repeat application of the induction voltage and stop of the application of the induction voltage; and
a time changing unit (78) configured to change a time for applying the induction voltage,
wherein
the application control unit stops the application of the induction voltage in a case that the electric discharge occurs after the application of the induction voltage has been started or in a case that an application interruption time (T3) elapses without the electric discharge occurring after the application of the induction voltage has been started, and
the time changing unit changes the application interruption time.

2. The wire electrical discharge machine according to claim 1, wherein
the time changing unit changes the application interruption time based on information indicating a frequency of the electric discharges occurring in a unit time (UT).

3. The wire electrical discharge machine according to claim 2, wherein
the information indicates a number of electric discharges occurring in the unit time, and
the application control unit lengthens the application interruption time as the number of electric discharges is larger.

4. The wire electrical discharge machine according to claim 2, wherein
the information indicates an integrated time of discharge delay times (T1) in the unit time, the discharge delay time being a time period from when the application of the induction voltage is started to when the electric discharge occurs, and
the application control unit lengthens the application interruption time as the integrated time is shorter.

5. The wire electrical discharge machine according to claim 1, wherein
the time changing unit changes the application interruption time based on a machining shape specified by a machining program.

6. The wire electrical discharge machine according to claim 5, wherein
in a case that the machining shape is an outer corner portion, the time changing unit shortens the application interruption time as a radius of curvature of the outer corner portion is smaller, and in a case that the machining shape is an inner corner portion, the time changing unit lengthens the application interruption time as a radius of curvature of the inner corner portion is smaller.

7. The wire electrical discharge machine according to claim 1, wherein
the time changing unit changes the application interruption time based on a degree of effect on straightness accuracy selected by an operator.

8. The wire electrical discharge machine according to any one of claims 1 to 7, further comprising:
a feed rate adjustment unit configured to adjust a feed rate of a relative position between the workpiece and the wire electrode,
wherein the time changing unit calculates a dummy average voltage obtained in a case where the application interruption time is not changed, based on an average voltage of the induction voltage applied per unit time and a reference value of the application interruption time, and
the feed rate adjustment unit controls the feed rate in accordance with the dummy average voltage.

9. The wire electrical discharge machine according to any one of claims 1 to 8, wherein
the time changing unit keeps a total time (T4) of the application interruption time and a pause time (T2) constant, the pause time being a time period from when the application interruption time elapses to when the application of the induction voltage is started again.

10. The wire electrical discharge machine according to any one of claims 1 to 9, wherein
the application control unit applies the induction voltage again when a pause time has elapsed since the stop of the application of the induction voltage, and
the time changing unit changes the pause time together with the application interruption time.
